(19) **Europäisches Patentamt**

**European Patent Office**

**Office européen des brevets**

(11) **EP 1 540 593 B1**

(12) **EUROPEAN PATENT SPECIFICATION**

(45) Date of publication and mention
of the grant of the patent:
**15.02.2006 Bulletin 2006/07**

(51) Int Cl.:
**G06T 5/00** (2006.01)

(21) Application number: **03795100.1**

(22) Date of filing: **05.08.2003**

(86) International application number:
**PCT/IB2003/003377**

(87) International publication number:
**WO 2004/025558 (25.03.2004 Gazette 2004/13)**

(54) **METHOD FOR IMAGE SCALING**

VERFAHREN ZUR BILDSKALIERUNG

UNITE ET PROCEDE DE CONVERSION D'IMAGES

(84) Designated Contracting States:
**AT BE BG CH CY CZ DE DK EE ES FI FR GB GR
HU IE IT LI LU MC NL PT RO SE SI SK TR**

(30) Priority: **11.09.2002 EP 02078720**

(43) Date of publication of application:
**15.06.2005 Bulletin 2005/24**

(73) Proprietor: **Koninklijke Philips Electronics N.V.
5621 BA Eindhoven (NL)**

(72) Inventor: **DE HAAN, Gerard
NL-5656 AA Eindhoven (NL)**

(74) Representative: **Groenendaal, Antonius W. M.
Philips
Intellectual Property & Standards
P.O. Box 220
5600 AE Eindhoven (NL)**

(56) References cited:
- XIN LI ET AL: "New edge-directed interpolation" IEEE TRANSACTIONS ON IMAGE PROCESSING, IEEE INC. NEW YORK, US, vol. 10, no. 10, October 2001 (2001-10), pages 1521-1527, XP002267654 ISSN: 1057-7149 cited in the application
- ATKINS C B ET AL: "Optimal image scaling using pixel classification" PROCEEDINGS 2001 INTERNATIONAL CONFERENCE ON IMAGE PROCESSING. ICIP 2001. THESSALONIKI, GREECE, OCT. 7 - 10, 2001, INTERNATIONAL CONFERENCE ON IMAGE PROCESSING, NEW YORK, NY : IEEE, US, vol. VOL. 1 OF 3. CONF. 8, 7 October 2001 (2001-10-07), pages 864-867, XP010563487 ISBN: 0-7803-6725-1
- QING WANG ET AL: "A new edge-directed image expansion scheme" PROCEEDINGS 2001 INTERNATIONAL CONFERENCE ON IMAGE PROCESSING. ICIP 2001. THESSALONIKI, GREECE, OCT. 7 - 10, 2001, INTERNATIONAL CONFERENCE ON IMAGE PROCESSING, NEW YORK, NY : IEEE, US, vol. VOL. 1 OF 3. CONF. 8, 7 October 2001 (2001-10-07), pages 899-902, XP010563496 ISBN: 0-7803-6725-1
- ALLEBACH J ET AL: "Edge-directed interpolation" PROCEEDINGS OF THE INTERNATIONAL CONFERENCE ON IMAGE PROCESSING (ICIP) LAUSANNE, SEPT. 16 - 19, 1996, NEW YORK, IEEE, US, vol. VOL. 1, 16 September 1996 (1996-09-16), pages 707-710, XP010202492 ISBN: 0-7803-3259-8

EP 1 540 593 B1

**Description**

The invention relates to an image conversion unit for converting a first image with a first resolution into a second image with a second resolution, the image conversion unit comprising:

- a coefficient-calculating means for calculating a first filter coefficient on basis of pixel values of the first image;
- an adaptive filtering means for calculating a second pixel value of the second image on basis of a first one of the pixel values of the first image and the first filter coefficient.

The invention further relates to a method of converting a first image with a first resolution into a second image with a second resolution, the method comprising:

- calculating a first filter coefficient on basis of pixel values of the first image;
- calculating a second pixel value of the second image on basis of a first one of the pixel values of the first image and the first filter coefficient.

The invention further relates to an image processing apparatus comprising:

- receiving means for receiving a signal corresponding to the first image; and
- the above mentioned image conversion unit for converting a first image into a second image.

The advent of HDTV emphasizes the need for spatial up-conversion techniques that enable standard definition (SD) video material to be viewed on high definition (HD) television (TV) displays. Conventional techniques are linear interpolation methods such as bi-linear interpolation and methods using poly-phase low-pass interpolation filters. The former is not popular in television applications because of its low quality, but the latter is available in commercially available ICs. With the linear methods, the number of pixels in the frame is increased, but the high frequency part of the spectrum is not extended, i.e. the perceived sharpness of the image is not increased. In other words, the capability of the display is not fully exploited.

Additional to the conventional linear techniques, a number of non-linear algorithms have been proposed to achieve this up-conversion. Sometimes these techniques are referred to as content-based or edge dependent spatial up-conversion. Some of the techniques are already available on the consumer electronics market.

An embodiment of the image conversion unit of the kind described in the opening paragraph is known from the article "New Edge-Directed Interpolation", by Xin Li et al., in IEEE Transactions on Image Processing, Vol. 10, No 10, October 2001, pp. 1521-1527. In this image conversion unit, the filter coefficients of an interpolation up-conversion filter are adapted to the local image content. The interpolation up-conversion filter aperture uses a fourth order interpolation algorithm as specified in Equation 1:

$$F_{HD}\big(2(i+1),2(j+1)\big) = \sum_{k=0}^{1}\sum_{l=0}^{1} w_{2k+l} F_{SD}\big(2i+2k, 2j+2l\big) \qquad (1)$$

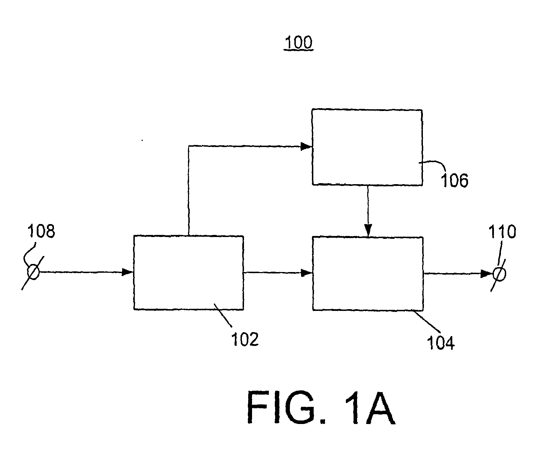

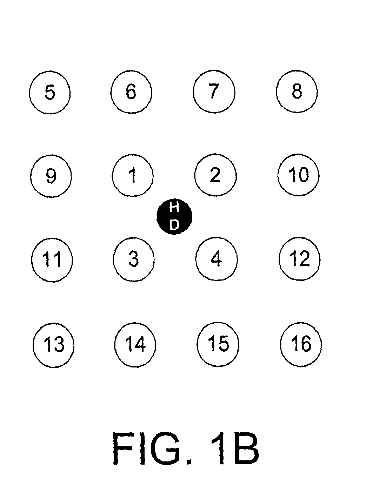

with $F_{HD}(i, j)$ the luminance values of the HD output pixels, $F_{SD}(i, j)$ the luminance values of the input pixels and $w_i$ the filter coefficients. The filter coefficients are obtained from a larger aperture using a Least Mean Squares (LMS) optimization procedure. In the cited article is explained how the filter coefficients are calculated. The method according to the prior art is also explained in connection with Fig. 1A and Fig. 1B. The method aims at interpolating along edges rather than across them to prevent blurring. The authors make the sensible assumption that edge orientation does not change with scaling. Therefore, the coefficients can be approximated from the SD input image within a local window by using the LMS method.

Although the "New Edge-Directed Interpolation" method according to the cited prior art works relatively well in many image parts, there is a problem with the up-conversion in areas of the image with abundant detail.

It is an object of the invention to provide an image conversion unit of the kind described in the opening paragraph with an improved performance in areas of the image with abundant detail.

This object of the invention is achieved in that the image conversion unit further comprises a further filtering means for filtering the first image resulting in filtered pixel values and the coefficient-calculating means being arranged to calculate the first filter coefficient on basis of the filtered pixel values. Pixel values are luminance values or color values. An assumption underlying the prior art algorithm being implemented by means of an image conversion unit, i.e. that edge orientation does not change with scaling, is no longer valid in these areas. This is because, although the coefficients are optimized on a lower density grid, there are no means to prevent aliasing at this grid. In the image conversion unit according to the invention a further filtering means prior to calculating the filter coefficients is included. Notice that this further filtering means is not in the direct path of processing the input pixels of the first image into output pixels, i.e. the pixels of the second image, but in the control path to determine the filter coefficients. Preferably the further filtering means comprises a spatial low-pass filter.

In an embodiment of the image conversion unit according to the invention, the spatial low-pass filter has a pass-band substantially corresponding to a quarter of a sampling frequency of the first image. This low-pass filter is in correspondence with the Sampling Theorem.

The spatial low-pass filter might be a one-dimensional filter or a cascade of two orthogonal filters but alternatively a two-dimensional filter is applied. In an embodiment of the image conversion unit according to the invention, the spatial low-pass filter is arranged to calculate a first one of the filtered pixel values by means of averaging pixel values of a block of pixels of the first image. An advantage of this embodiment according to the invention is that it is relatively simple. The block of pixels might correspond to e.g. 2*2 or 2*3 or 4*4 pixels.

It is a further object of the invention to provide a method of the kind described in the opening paragraph with an improved performance in areas of the image with abundant detail.

This object of the invention is achieved in that the method further comprises filtering the first image resulting in filtered pixel values and calculating the first filter coefficient on basis of the filtered pixel values.

It is a further object of the invention to provide an image processing apparatus of the kind described in the opening paragraph with an improved performance in areas of the image with abundant detail.

This object of the invention is achieved in that the image conversion unit of the image processing apparatus further comprises a further filtering means for filtering the first image resulting in filtered pixel values and the coefficient-calculating means being arranged to calculate the first filter coefficient on basis of the filtered pixel values. The image processing apparatus optionally comprises a display device for displaying the second image. The image processing apparatus might e.g. be a TV, a set top box, a VCR (Video Cassette Recorder) player or a DVD (Digital Versatile Disk) player.

Modifications of image conversion unit and variations thereof may correspond to modifications and variations thereof of the method and of the image processing apparatus described.

These and other aspects of the image conversion unit, of the method and of the image processing apparatus according to the invention will become apparent from and will be elucidated with respect to the implementations and embodiments described hereinafter and with reference to the accompanying drawings, wherein:

Fig. 1A schematically shows an embodiment of the image conversion unit according to the prior art;
Fig. 1B schematically shows a number of pixels to explain the method according to the prior art;
Fig. 2A schematically shows a number of pixels to explain the method according to the invention;
Fig. 2B schematically shows an embodiment of the image conversion unit according to the invention;
Fig. 3A schematically shows as SD input image;
Fig. 3B schematically shows the SD input image of Fig. 3A on which pixels are added in order to increase the resolution;
Fig. 3C schematically shows the image of Fig. 3B after being rotated over 45 degrees;
Fig. 3D schematically shows an HD output image derived from the SD input image of Fig. 3A; and
Fig. 4 schematically shows an embodiment of the image processing apparatus according to the invention.

Same reference numerals are used to denote similar parts throughout the figures.

Fig. 1A schematically shows an embodiment of the image conversion unit 100 according to the prior art. The image conversion unit 100 is provided with standard definition (SD) images at the input connector 108 and provides high definition (HD) images at the output connector 110. The image conversion unit 100 comprises:

- A pixel acquisition unit 102 which is arranged to acquire a first set of values of pixels 1-4 in a first neighborhood of a particular location within a first one of the SD input images which corresponds with the location of an HD output pixel and to acquire a second set of values of pixels 1-16 in a second neighborhood of the particular location within the first one of the SD input images;
- A filter coefficient-calculating unit 106, which is arranged to calculate filter coefficients on basis the first set of values of pixels 1-4 and the second set of values of pixels 1-16. In other words, the filter coefficients are approximated from the SD input image within a local window. This is done by using a Least Mean Squares (LMS) method which is explained in connection with Fig. 1B.
- An adaptive filtering unit 104 for calculating the value of the HD output pixel on basis of the first set of values of pixels 1-4 and the filter coefficients as specified with Equation 1. Hence the filter coefficient-calculating unit 106 is arranged to control the adaptive filtering unit 104.

Fig. 1B schematically shows a number of pixels 1-16 of an SD input image and one HD pixel of an HD output image, to explain the method according to the prior art. The HD output pixel is interpolated as a weighted average of 4 pixels 1-4. That means that the luminance value of the HD output pixel $F_{HD}$ results as a weighted sum of its 4 SD neighboring pixels:

$$F_{HD} = w_1 F_{SD}(1) + w_2 F_{SD}(2) + w_3 F_{SD}(3) + w_4 F_{SD}(4), \qquad (2)$$

where $F_{SD}(1)$ to $F_{SD}(4)$ are the values of the 4 SD input pixels 1-4 and $w_1$ to $w_4$ are the filter coefficients to be calculated. The authors of the cited article in which the prior art method is described, make the sensible assumption that edge orientation does not change with scaling. The consequence of this assumption is that the optimal filter coefficients are the same as those to interpolate, on the standard resolution grid:

- Pixel 1 from 5, 7, 11, and 4 (that means that pixel 1 can be derived from its 4 neighbors)
- Pixel 2 from 6, 8, 3, and 12
- Pixel 3 from 9, 2, 13, and 15
- Pixel 4 from 1, 10, 14, and 16

This gives a set of 4 linear equations from which with the LSM-optimization the optimal 4 filter coefficients to interpolate the HD output pixel are found.

Denoting $M$ as the pixel set, on the *SD*-grid, used to calculate the 4 weights, the Means Square Error (MSE) over set $M$ in the optimization can be written as the sum of squared differences between original *SD*-pixels $F_{SD}$ and interpolated *SD* -pixels $F_{Si}$:

$$MSE = \sum_{F_{SD(i,j)} \in M} \left( F_{SD}(2i+2, 2j+2) - F_{SI}(2i+2, 2j+2) \right)^2 \qquad (3)$$

Which in matrix formulation becomes:

$$MSE = \left\| \vec{y} - \vec{w}C \right\|^2 \qquad (4)$$

Here $\vec{y}$ contains the *SD*-pixels in $M$ (pixel $F_{SD}(1,1)$ to $F_{SD}(1,4)$, $F_{SD}(2,1)$ to $F_{SD}(2,4)$, $F_{SD}(3,1)$ to $F_{SD}(3,4)$, $F_{SD}(4,1)$ to $F_{SD}(4,4)$ and $C$ is a $4 \times M^2$ matrix whose $k^{th}$ row is composed of the weighted sum of the four diagonal *SD* -neighbors of each *SD*-pixels in $\vec{y}$. The weighted sum of each row describes a pixel $F_{SI}$, as used in Equation 3. To find the minimum *MSE,* i.e. LMS, the derivation of *MSE* over $\vec{w}$ is calculated:

$$\frac{\partial(MSE)}{\partial \vec{w}} = 0 \qquad (5)$$

$$-2\vec{y}C + 2\vec{w}C^2 = 0 \qquad (6)$$

$$\vec{w} = \left( C^T C \right)^{-1} \left( C^T \vec{y} \right) \qquad (7)$$

By solving Equation 7 the filter coefficients are found and by using Equation 2 the values of the HD output pixels can be calculated.

In this example a window of 4 by 4 pixels is used for the calculation of the filter coefficients. An LMS optimization on a larger window, e.g. 8 by 8 instead of 4 by 4 gives better results.

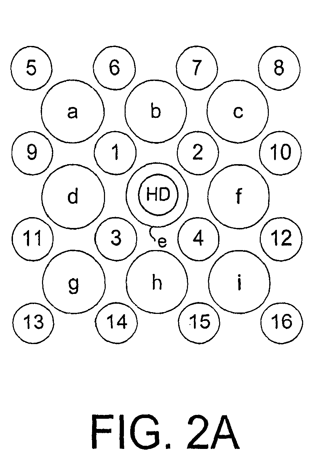

To further elucidate the invention a very simple example implementation of the invention is explained, in which the further filtering means is a 4-pixel averaging filter and the LMS-method is applied on a 5 by 5 block around the HD pixel to be interpolated. Reference is made to Fig. 2A for the numbering of pixels. First, the filtered pixels on the low-density grid are calculated, using the average values of their diagonal neighbors, i.e.:

- Pixel a = (5+6+9+1)/4
- Pixel b = (6+7+1+2)/4
- .....
- .....
- Pixel i = (4+12+15+16)/4

Next, the optimal filter coefficients to interpolate pixel HD (at the same position as pixel e) as a weighted sum of pixels 1, 2, 3, and 4 have to be calculated. To that end, the LMS method for solving the optimal interpolation of the 9 filtered pixels, a, b, c,..i from their 4 diagonal neighbors is applied. For example, pixel e is interpolated from pixels a, c, g, and i. Fig. 2A would have to be extended, as the diagonal neighbors of pixels a, b, c, d, f, g, h, and I are not shown in this Fig.

Clearly, the aperture for the LMS algorithm can be extended to e.g. 5 by 5, or 7 by 7, and a higher order filter can advantageously replace the 4-pixel averaging filter. Also a symmetrical filter -with an odd number of taps- can be used with block sizes of 4 by 4, 8 by 8, etc. Besides that the shape of the aperture does not have to be rectangular.

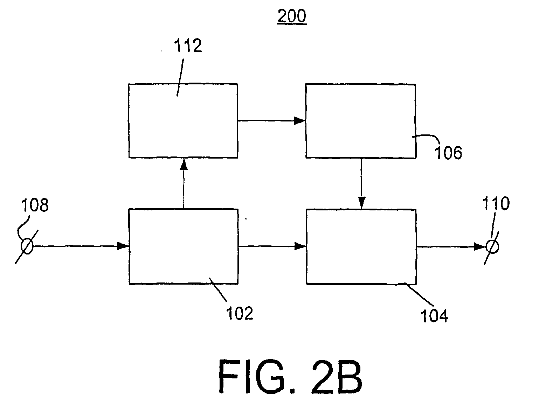

Fig. 2B schematically shows an embodiment of the image conversion unit 200 according to the invention. The image conversion unit 200 is provided with standard definition (SD) images at the input connector 108 and provides high definition (HD) images at the output connector 110. The SD input images have pixel matrices as specified in CCIR-601, e.g. 625*720 pixels or 525*720 pixels. The HD output images have pixel matrices with e.g. twice or one-and-a-halve times the number of pixels in horizontal and vertical direction. The image conversion unit 200 comprises:

- A pixel acquisition unit 102 which is arranged to acquire a first set of values of pixels 1-4 in a first neighborhood of a particular location within a first one of the SD input images which corresponds with the location of the output pixel HD and to acquire a second set of values of pixels 1-16 in a second neighborhood of the particular;
- A low-pass filter 112 for calculating a set of averaged values a, b, c,..i, i.e. filtered pixel values a, b, c,..i, on basis of the second set of values of pixels 1-16;
- A filter coefficient-calculating unit 106 which is arranged to calculate filter coefficients on basis of the set of filtered pixels a, b, c,..i. and the second set of values of pixels 1-16. In other words, the filter coefficients are approximated from the filtered SD input image within a local window. This is done by using a Least Mean Squares (LMS) method which is explained in connection with Fig. 1B and Fig. 2A; and
- An adaptive filtering unit 104 for calculating a pixel value of an HD output image on basis of the second set of values of pixels 1-4. The HD output pixel is calculated as the weighted sum of the pixels 1-4.

The pixel acquisition unit 102, the low-pass filter 112, the filter coefficient-calculating unit 106 and the adaptive filtering unit 104 may be implemented using one processor. Normally, these functions are performed under control of a software program product. During execution, normally the software program product is loaded into a memory, like a RAM, and executed from there. The program may be loaded from a background memory, like a ROM, hard disk, or magnetically and/or optical storage, or may be loaded via a network like Internet. Optionally an application specific integrated circuit provides the disclosed functionality.

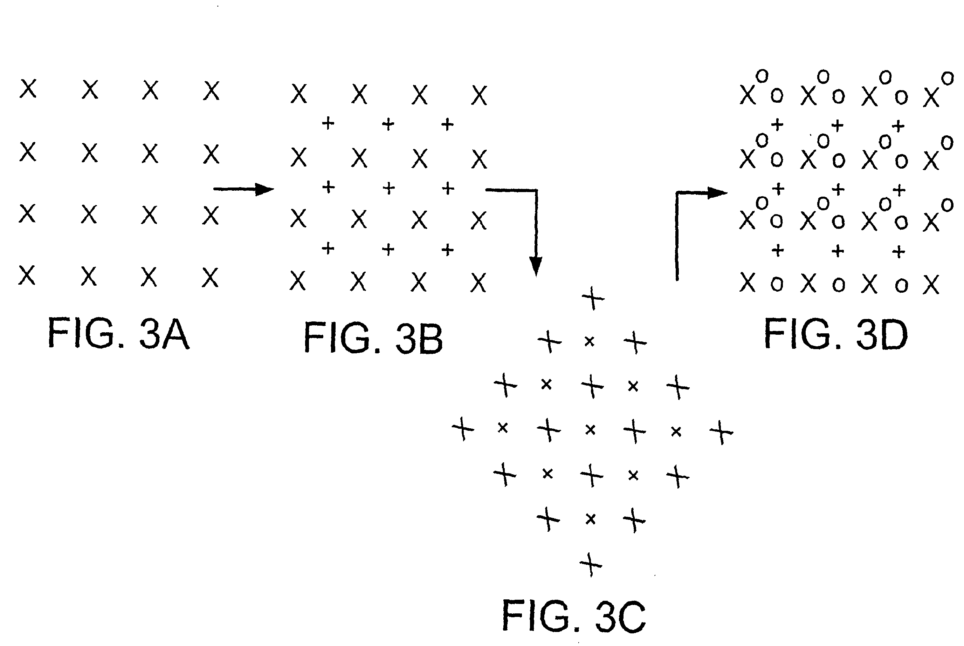

To convert an SD input image into an HD output image a number of processing steps are needed. By means of Figs. 3A-3D these processing steps are explained. Fig. 3A schematically shows an SD input image; Fig. 3D schematically shows an HD output image derived from the SD input image of Fig. 3A and Figs. 3B and 3C schematically show intermediate results.

- Fig. 3A schematically shows an SD input image. Each X-sign correspond with a respective pixel.
- Fig. 3B schematically shows the SD input image of Fig. 3A on which pixels are added in order to increase the resolution. The added pixels are indicated with +-signs. These added pixels are calculated by means of interpolation of the respective diagonal neighbors. The filter coefficients for the interpolation are determined as described in connection with Fig 2B.
- Fig. 3C schematically shows the image of Fig. 3B after being rotated over 45 degrees. The same image conversion unit 200 as being applied to calculate the image as depicted in Fig. 3B on basis of Fig. 3A can be used to calculate the image as shown in Fig. 3D on basis of the image as depicted in Fig. 3B. That means that new pixel values are calculated by means of interpolation of the respective diagonal neighbors.

- Fig. 3D schematically shows the final HD output image. The pixels that have been added in the last conversion step are indicated with o-signs.

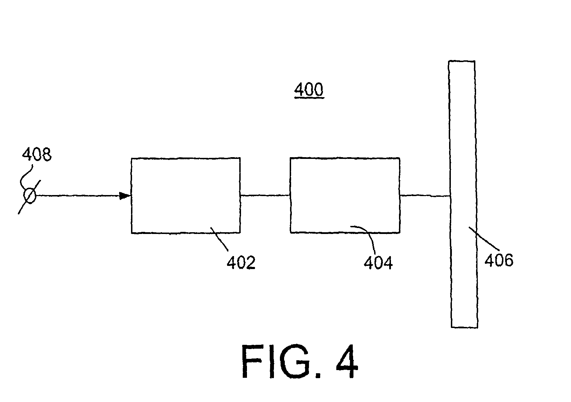

Fig. 4 schematically shows an embodiment of the image processing apparatus 400 according to the invention, comprising:

- Receiving means 402 for receiving a signal representing SD images. The signal may be a broadcast signal received via an antenna or cable but may also be a signal from a storage device like a VCR (Video Cassette Recorder) or Digital Versatile Disk (DVD). The signal is provided at the input connector 408;
- The image conversion unit 404 as described in connection with Fig. 2B; and
- A display device 406 for displaying the HD output images of the image conversion unit 200. This display device 406 is optional.

The image processing apparatus 400 might e.g. be a TV. Alternatively the image processing apparatus 400 does not comprise the optional display device but provides HD images to an apparatus that does comprise a display device 406. Then the image processing apparatus 400 might be e.g. a set top box, a satellite-tuner, a VCR player or a DVD player. But it might also be a system being applied by a film-studio or broadcaster.

It should be noted that the above-mentioned embodiments illustrate rather than limit the invention and that those skilled in the art will be able to design alternative embodiments without departing from the scope of the appended claims. In the claims, any reference signs placed between parentheses shall not be constructed as limiting the claim. The word 'comprising' does not exclude the presence of elements or steps not listed in a claim. The word "a" or "an" preceding an element does not exclude the presence of a plurality of such elements. The invention can be implemented by means of hardware comprising several distinct elements and by means of a suitable programmed computer. In the unit claims enumerating several means, several of these means can be embodied by one and the same item of hardware.

## Claims

1. An image conversion unit for converting a first image with a first resolution into a second image with a second resolution, the image conversion unit comprising:

   - a coefficient-calculating means for calculating a first filter coefficient on basis of pixel values of the first image;
   - an adaptive filtering means for calculating a second pixel value of the second image on basis of a first one of the pixel values of the first image and the first filter coefficient, **characterized in that** the image conversion unit further comprises a further filtering means for filtering the first image resulting in filtered pixel values and the coefficient-calculating means being arranged to calculate the first filter coefficient on basis of the filtered pixel values.

2. An image conversion unit as claimed in claim 1, **characterized in that** the further filtering means comprises a spatial low-pass filter.

3. An image conversion unit as claimed in claim 2, **characterized in that** the spatial low-pass filter has a pass-band substantially corresponding to a quarter of a sampling frequency of the first image.

4. An image conversion unit as claimed in claim 2, **characterized in that** the spatial low-pass filter is arranged to calculate a first one of the filtered pixel values by means of averaging pixel values of a block of pixels of the first image.

5. A method of converting a first image with a first resolution into a second image with a second resolution, the method comprising:

   - calculating a first filter coefficient on basis of pixel values of the first image;
   - calculating a second pixel value of the second image on basis of a first one of the pixel values of the first image and the first filter coefficient, **characterized in that** the method further comprises filtering the first image resulting in filtered pixel values and calculating the first filter coefficient on basis of the filtered pixel values.

6. An image processing apparatus comprising:

   - receiving means for receiving a signal corresponding to a first image; and

- the image conversion unit for converting the first image into a second image, as claimed in claim 1.

**7.** An image processing apparatus as claimed in claim 6, further comprising a display device for displaying the second image.

**Patentansprüche**

**1.** Bildskalierungseinheit zum Skalieren eines ersten Bilds mit einer ersten Auflösung auf ein zweites Bild mit einer zweiten Auflösung, wobei die Bildskalierungseinheit Folgendes umfasst:

- ein Koeffizientenberechnungsmittel zum Berechnen eines ersten Filterkoeffizienten auf der Basis von Pixelwerten des ersten Bilds;
- ein adaptives Filtermittel zum Berechnen eines zweiten Pixelwerts des zweiten Bilds auf der Basis eines ersten der Pixelwerte des ersten Bilds und des ersten Filterkoeffizienten,

**dadurch gekennzeichnet, dass** die Bildskalierungseinheit des Weiteren ein zusätzliches Filtermittel zum Filtern des ersten Bilds umfasst, woraus sich gefilterte Pixelwerte ergeben, und das Koeffizientenberechnungsmittel so eingerichtet ist, dass es den ersten Filterkoeffizienten auf der Basis der gefilterten Pixelwerte berechnet.

**2.** Bildskalierungseinheit nach Anspruch 1, **dadurch gekennzeichnet, dass** das zusätzliche Filtermittel ein räumliches Tiefpassfilter umfasst.

**3.** Bildskalierungseinheit nach Anspruch 2, **dadurch gekennzeichnet, dass** das räumliche Tiefpassfilter einen Durchlassbereich hat, der ungefähr einem Viertel einer Abtastfrequenz des ersten Bilds entspricht.

**4.** Bildskalierungseinheit nach Anspruch 2, **dadurch gekennzeichnet, dass** das räumliche Tiefpassfilter so eingerichtet ist, dass es durch Mittelung der Pixelwerte eines Blocks von Pixeln des ersten Bilds einen ersten der gefilterten Pixelwerte berechnet.

**5.** Verfahren zur Skalierung eines ersten Bilds mit einer ersten Auflösung auf ein zweites Bild mit einer zweiten Auflösung, wobei das Verfahren Folgendes umfasst:

- Berechnen eines ersten Filterkoeffizienten auf der Basis von Pixelwerten des ersten Bilds;
- Berechnen eines zweiten Pixelwerts des zweiten Bilds auf der Basis eines ersten der Pixelwerte des ersten Bilds und des ersten Filterkoeffizienten,

**dadurch gekennzeichnet, dass** das Verfahren des Weiteren das Filtern des ersten Bilds umfasst, woraus sich gefilterte Pixelwerte ergeben, sowie das Berechnen des ersten Filterkoef fizienten auf der Basis der gefilterten Pixelwerte.

**6.** Bildverarbeitungsgerät, welches Folgendes umfasst:

- Empfangsmittel zum Empfangen eines Signals, das einem ersten Bild entspricht; und
- die Bildskalierungseinheit nach Anspruch 1 zum Skalieren des ersten Bilds auf ein zweites Bild.

**7.** Bildverarbeitungsgerät nach Anspruch 6, das des Weiteren eine Anzeigeeinrichtung zum Anzeigen des zweiten Bilds umfasst.

**Revendications**

**1.** Unité de conversion d'image destinée à convertir une première image détentrice d'une première résolution en une seconde image détentrice d'une seconde résolution, cette unité de conversion d'image comprenant :

- un moyen de calcul de coefficient destiné à calculer un premier coefficient de filtrage sur la base des nombres de pixels de la première image ;
- un moyen de filtrage adaptatif destiné à calculer un second nombre de pixels de la seconde image sur la base de l'un des premiers nombres de pixels de la première image et du premier coefficient de filtrage, **caractérisée en ce que** l'unité de conversion d'image comprend en outre un moyen de filtrage supplémentaire destiné à filtrer la première image résultant en des nombres de pixels filtrés et le moyen de calcul du coefficient étant agencé pour calculer le premier coefficient de filtrage sur la base des nombres de pixels filtrés.

2. Unité de conversion d'image selon la revendication 1, **caractérisée en ce que** le moyen de filtrage supplémentaire comprend un filtre spatial passe-bas.

3. Unité de conversion d'image selon la revendication 2, **caractérisée en ce que** le filtre spatial passe-bas présente une bande passante correspondant substantiellement à un quart d'une fréquence d'échantillonnage de la première image.

4. Unité de conversion d'image selon la revendication 2, **caractérisée en ce que** le filtre spatial passe-bas est agencé de sorte à calculer l'un des premiers nombres de pixels filtrés, au moyen d'un calcul des nombres moyens de pixels dans un bloc de pixels de la première image.

5. Procédé de conversion d'une première image détentrice d'une première résolution en une seconde image détentrice d'une seconde résolution, ce procédé comprenant :

- le calcul d'un premier coefficient de filtrage sur la base de nombres de pixels de la première image ;
- le calcul d'un second nombre de pixels de la seconde image sur la base de l'un des premiers nombres de pixels de la première image et du premier coefficient de filtrage, **caractérisé en ce que** le procédé comprend en outre le filtrage de la première image résultant en des nombres de pixels filtrés, et le calcul du premier coefficient de filtrage sur la base des nombres de pixels filtrés.

6. Appareil de traitement d'image comprenant :

- des moyens de réception destinés à recevoir un signal correspondant à une première image ; et
- l'unité de conversion d'image destinée à convertir la première image en une seconde image conformément à la revendication 1.

7. Appareil de traitement d'image selon revendication 6, comprenant en outre un appareil d'affichage destiné à afficher la seconde image.

FIG. 1A

FIG. 1B

FIG. 2A

FIG. 2B

EP 1 540 593 B1

FIG. 3A

FIG. 3B

FIG. 3C

FIG. 3D

400

408

402

404

406

FIG. 4